# FASCICULE DE BREVET EUROPEEN

(11) **EP 3 374 168 B1**
(45) Date de publication et mention de la délivrance du brevet: **15.02.2023**
(21) Numéro de dépôt: 16809133.8
(22) Date de dépôt: 09.11.2016
(51) Int. Cl.: B29C 70/54, B32B 7/04

(54) **PIÈCE EN MATÉRIAU COMPOSITE COMPORTANT UN RENFORT CONTRE LE DÉLAMINAGE ET SON PROCÉDÉ DE FABRICATION**
AUS VERBUNDSTOFFMATERIAL HERGESTELLTES TEIL MIT EINER VERSTÄRKUNG GEGEN DELAMINATION UND HERSTELLUNGSVERFAHREN DAFÜR
PART MADE FROM COMPOSITE MATERIAL, COMPRISING A REINFORCEMENT AGAINST DELAMINATION, AND PRODUCTION METHOD THEREOF

(30) Priorité: 09.11.2015 FR 1560702
(43) Date de publication de la demande: 19.09.2018
(73) Titulaire: Safran Nacelles, 76700 Gonfreville-l'Orcher (FR)
(72) Inventeur: DELEHOUZE, Arnaud, 76700 Gonfreville L'orcher (FR); GERMAIN, Etienne, 76700 Gonfreville L'orcher (FR); LOUCHARD, Sébastien, 76700 Gonfreville L'orcher (FR); PROVOST, Benjamin, 76700 Gonfreville L'orcher (FR)
(74) Mandataire: Germain Maureau
(86) Numéro de dépôt international: PCT/FR2016/052902
(87) Numéro de publication internationale: WO 2017/081405

(56) Documents cités:
- EP-A1- 2 540 479
- EP-A1- 2 808 156
- US-A- 4 113 910
- US-A- 5 789 061
- US-A- 5 876 540
- US-A1- 2013 004 715

## Description

L'invention concerne une pièce en matériau composite qui comporte un renfort contre le délaminage de la pièce, selon la revendication 1.

L'invention concerne également un procédé de fabrication d'une telle pièce composite, selon la revendication 4.

De façon générale, la présente demande de brevet se rapporte au domaine de la fabrication de pièces en matériaux composites avec raidisseur, notamment pour l'aéronautique.

Pour des raisons de gains de masse et de coût, il est intéressant de remplacer des pièces métalliques par des pièces composites, en particulier des pièces structurales à géométrie complexe.

La plupart des pièces composites sont fabriquées à partir d'empilement de renforts fibreux, fréquemment appelés « plis », par exemple des fibres de carbone ou des fibres de verre, qui sont par la suite injectés de résine, cette résine étant généralement polymérisée par élévation de température.

Cette technologie est généralement satisfaisante pour des pièces monolithiques sollicitées suivant leur plan, mais peut se révéler inadaptée pour des structures sollicitées « hors plan ».

Ainsi, il est connu d'équiper certaines pièces d'un raidisseur, de section en T par exemple, qui est positionné perpendiculairement, ou avec un certain angle, au plan principal de la pièce.

Le raidisseur est généralement formé par un premier élément en L et un second élément en L en matériau composite qui sont agencés dos à dos pour former un T.

Plus particulièrement, chaque raidisseur comporte une embase qui est étendue sur la semelle de la pièce, et une nervure qui s'étend depuis l'embase associée pour former l'âme du raidisseur.

La nervure et l'embase de chaque élément en L sont reliées par une portion de raccord coudée.

La zone de jonction des éléments en L et de la semelle de la pièce, au voisinage des portions de raccord des éléments en L, délimite généralement une cavité qui est remplie de résine, ou bien qui forme une perturbation de la planéité des plis qui tendent à combler cette cavité.

Cette zone de jonction peut constituer un affaiblissement mécanique qui peut engendrer un dépliage des plis de la portion de raccord des éléments en L et un délaminage des plis entre chaque élément L et la semelle de la pièce.

En effet, la pièce composite peut être soumise, entre autre, à des efforts de traction colinéaire à la direction de l'âme formée par les nervures des éléments en L.

Ce type de sollicitation peut provoquer des dépliages des portions de raccord coudées des éléments en L, aboutissant à un délaminage prématuré de la pièce.

La présence de ce premier endommagement à des efforts relativement faibles réduit l'utilisation de la pièce dans des zones structurales.

Pour renforcer la pièce, il est connu de réaliser des coutures pour lier les plis entre eux, notamment pour lier les éléments en L sur la semelle de la pièce. Ce type de procédé et de pièce est par exemple décrit dans les documents FR-A-2993492 et EP-A-2540479. D'autres configurations d'assemblage comprenant des aiguilles traversant les différents éléments sont divulguées dans le document US-A-5789061 qui décrit le préambule de la revendication 1.

De telles coutures permettent de renforcer la pièce mais ne sont pas entièrement satisfaisantes.

En effet, on observe que la tension du fil, notamment dans la zone de jonction des portions de raccord coudées des éléments en L et de la semelle de la pièce, n'est pas suffisante pour reprendre les contraintes de dépliage.

Lorsque les fils ne sont pas suffisamment tendus, il est nécessaire de déformer suffisamment la pièce pour permettre au fil de se tendre et donc de jouer son rôle de renfort.

La déformation nécessaire pour la mise en tension du fil est bien souvent suffisante pour engendrer des fissurations et autres délaminages néfastes à la tenue de la pièce.

La présente invention vise notamment à résoudre ces inconvénients et se rapporte pour ce faire à une pièce en matériau composite qui comporte une semelle et un renfort en T, le renfort en T comprenant un premier élément en L et un second élément en L qui sont agencés dos à dos pour former globalement un T, le premier élément en L et le second élément en L comprenant :
- une première embase et une seconde embase respectivement, qui sont étendues chacune sur la semelle de ladite pièce,
- une première nervure et une seconde nervure respectivement qui sont accolées dos à dos pour former une âme,
- une première portion de raccord et une seconde portion de raccord respectivement qui relient lesdites nervures sur lesdites embases associées,

cette pièce comprenant une pluralité d'aiguilles qui relient chacune la semelle sur le renfort en T de ladite pièce, au voisinage desdites portions de raccord et qui s'étendent dans plusieurs directions pour s'opposer notamment à l'écartement de la semelle et du renfort en T,
cette pièce comportant un noyau qui est logé dans une cavité délimitée par une zone de jonction entre la semelle, la première portion de raccord et la seconde portion de raccord, les aiguilles traversant ledit noyau,
au moins une partie des aiguilles s'étendant globalement radialement suivant le rayon de courbure de la première portion de raccord et de la seconde portion de raccord des éléments en L,
au moins une autre partie des aiguilles s'étendant globalement suivant la direction des nervures des éléments en L, et
lesdites aiguilles s'étendant en étoile en se croisant au centre du noyau et de ladite pièce.

Les aiguilles permettent de lier des plis fibreux entre eux en présentant une forme tendue, grâce à quoi les aiguilles s'opposent au dépliage des plis et à la déformation de la pièce dès les premiers instants de sollicitation mécaniques.

En effet, les aiguilles qui sont raides, n'ont pas à se tendre pour pouvoir reprendre des efforts mécaniques, contrairement aux fils utilisés dans l'art antérieur.

Le noyau permet d'empêcher la concentration de résine dans la cavité formée par les éléments en L et la semelle et empêche également le foisonnement des plis fibreux à cet endroit.

De plus, le noyau favorise la fixation des aiguilles.

Les aiguilles permettent de lier de façon efficace les portions de raccord des éléments en L sur la semelle et le noyau.

Ladite autre partie des aiguilles s'étendent globalement suivant la direction des nervures des éléments en L permet de lier les nervures sur la semelle.

Selon un exemple de réalisation préféré, les aiguilles sont formées par des fils pultrudés.

Ce type de fil offre l'avantage de présenter une forme qui se tient tendue.

De plus, les fils pultrudés sont réalisés dans un matériau de même nature que la pièce composite, par exemple en fibres de carbone imprégnées de résine.

Selon une autre caractéristique, le noyau est déformable pour épouser sensiblement la forme des éléments en L.

Cette caractéristique permet d'empêcher les amas de résines dans la cavité délimitées par les éléments en L.

L'invention concerne aussi un procédé pour la fabrication d'une pièce en matériau composite du type décrite précédemment, caractérisé en ce qu'il comporte au moins :
- une étape de dépose du premier élément en L et du second élément en L dans un moule,
- une étape de dépose du noyau,
- une étape de dépose de la semelle qui consiste à emprisonner le noyau.

De préférence, l'étape de dépose du noyau consiste à insérer les aiguilles à travers le noyau puis à insérer le noyau dans la cavité délimitée par une zone de jonction entre la première portion de raccord et la seconde portion de raccord desdits éléments en L.

Aussi, le procédé comporte une étape de compactage de la pièce qui consiste à presser entre eux les éléments en L, la semelle et le noyau, pour faire pénétrer les aiguilles à travers les éléments en L et la semelle.

Enfin, le procédé comporte une étape de moulage de la pièce qui est réalisée à la suite de l'étape de compactage et qui consiste à mouler la pièce et à injecter de la résine dans la pièce.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective qui illustre la pièce composite selon l'invention ;
- la figure 2 est une vue schématique en coupe transversale qui illustre un noyau central et des aiguilles de renfort liant les plis de la pièce composite de la figure 1 ;
- la figure 3 est une vue schématique de détail en coupe transversale qui illustre le noyau et les aiguilles de la figure 2.

Dans la description et les revendications, on adoptera à titre non limitatif la terminologie longitudinal, vertical et transversal en référence au trièdre L, V, T indiqué aux figures.

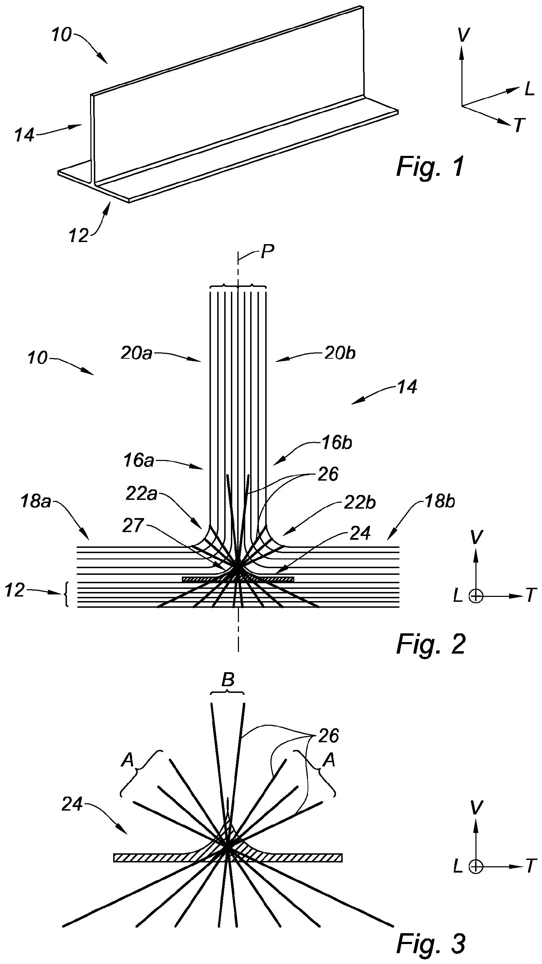

On a représenté à la figure 1 une pièce 10 en matériau composite qui comporte une semelle 12 et un renfort 14 en T, la semelle 12 et le renfort 14 étant réalisés chacun en plis fibreux imprégnés de résine.

La semelle 12 présente une forme plane horizontale qui s'étend suivant une direction longitudinale.

Le renfort 14 en T comprend un premier élément en L 16a et un second élément en L 16b qui sont agencés dos à dos pour former globalement un T.

La pièce 10 présente une conception symétrique suivant un plan P de symétrie vertical et longitudinal représenté à la figure 2.

Pour faciliter la compréhension de la description, les éléments identiques et symétriques suivant le plan P de symétrie sont indiqués par des mêmes références numériques distinguées par la lettre « a » ou « b ».

Le premier élément en L 16a et le second élément en L 16b comprennent une première embase 18a et une seconde embase 18b respectivement, qui sont étendues chacune sur la semelle 12 de la pièce 10.

Aussi, le premier élément en L 16a et le second élément en L 16b comportent une première nervure 20a et une seconde nervure 20b respectivement qui sont accolées dos à dos pour former une âme de renfort.

De plus, la première nervure 20a et la seconde nervure 20b sont reliées sur leur embase 18a, 18b respective par une première portion de raccord 22a coudée et une seconde portion de raccord 22b coudée respectivement.

On notera que l'angle formé entre les nervures 20a, 20b et leur embase 18a, 18b associée est un angle droit.

Toutefois, à titre non limitatif, les nervures 20a, 20b peuvent être plus ou moins inclinées par rapport à l'embase 18a, 18b associée.

Comme on peut le voir en détail à la figure 3, la pièce 10 comporte un noyau 24, aussi appelé tête de clou, qui est logé dans une cavité 27 délimitée par une zone de jonction entre la semelle 12, la première portion de raccord 22a et la seconde portion de raccord 22b.

Le noyau 24 est constitué par un ensemble de fibres maintenues entres elles, le noyau étant conçu pour combler des zones sans fibres, éviter les amas de résines et garantir le non foisonnement des plis dans cette zone de jonction.

A cet effet, le noyau 24 est déformable pour épouser la forme globalement triangulaire dessinée par les portions de raccord 22a, 22b coudées.

Selon une autre caractéristique, la pièce 10 comprend une pluralité d'aiguilles 26 qui relient chacune la semelle 12 sur le renfort 14 en T de la pièce 10, au voisinage des portions de raccord 22a, 22b.

On entend par « aiguilles 26 » tout élément fin capable de se tenir tendu, à l'inverse d'un fil lâche.

De préférence, les aiguilles 26 sont réalisées dans un matériau compatible avec les matériaux utilisés pour fabriquer la pièce 10 et le noyau 24, comme un matériau composite.

Selon un exemple préféré de réalisation, les aiguilles 26 sont constituées chacune par un fil pultrudé, c'est-à-dire un fil obtenu par un procédé de pultrusion, et qui comporte le même type de fibres que les fibres utilisées pour réaliser les plis du noyau 24 et du reste de la pièce 10. Ce type de fibre est par exemple des fibres de carbone.

On notera que les aiguilles 26 traversent le noyau 24 de part en part.

En référence à la figure 3, les aiguilles 26 s'étendent dans plusieurs directions pour s'opposer notamment à l'écartement de la semelle 12 et du renfort 14 en T.

Plus particulièrement, les aiguilles 26 s'étendent en étoile en se croisant au centre du noyau 24 et de la pièce 10.

Un premier groupe A d'aiguilles comporte des aiguilles 26 qui s'étendent globalement radialement suivant le rayon de courbure de la première portion de raccord 22a et de la seconde portion de raccord 22b des éléments en L 16a, 16b.

Les aiguilles 26 de ce premier groupe A s'étendent depuis la première portion de raccord 22a et a seconde portion de raccord 22b, jusqu'à la semelle 12 de la pièce 10, en passant par le noyau 24.

Un second groupe B d'aiguilles comporte des aiguilles 26 qui s'étendent globalement verticalement suivant la direction des nervures 20a, 20b des éléments en L 16a, 16b.

Les aiguilles 26 de ce second groupe B s'étendent depuis les nervures 20a, 20b des éléments en L 16a, 16b, jusqu'à la semelle 12 de la pièce 10, en passant par le noyau 24.

L'utilisation d'aiguilles 26 permet aux aiguilles 26 une bonne pénétration dans toute l'épaisseur de la pièce 10 tout en gardant leur rigidité.

Ainsi, les aiguilles 26 vont pouvoir agir dès les premiers instants de sollicitations mécaniques de la pièce 10, pour s'opposer notamment au dépliage des portion de raccord 22a, 22b des éléments L 16a, 16b.

La pièce 10 est réalisée suivant un procédé décrit ci-après.

Le procédé de fabrication selon l'invention comporte une étape de dépose du premier élément en L 16a et du second élément en L 16b dans un moule.

A la suite de cette étape de dépose, le procédé comporte une étape de dépose du noyau 24 qui consiste à insérer les aiguilles 26 à travers le noyau 24 puis à insérer l'ensemble formé par le noyau 24 et les aiguilles 26 dans le creux formé par les portions de raccord 22a, 22b des éléments en L 16a, 16b.

A titre non limitatif, cette étape de dépose du noyau 24 peut être réalisée différemment, en insérant le noyau 24 dans le creux formé par les portions de raccord 22a, 22b des éléments en L 16a, 16b puis en insérant les aiguilles 26 à travers le noyau ainsi positionné.

Le procédé comporte également une étape de dépose de la semelle 12 qui consiste à étendre la semelle 12 sur l'embase 18a, 18b des éléments en L 16a, 16b de façon à emprisonner le noyau 24.

A la suite de l'étape de dépose de la semelle 12, le procédé comporte une étape de compactage de la pièce 10 qui consiste à presser entre eux les éléments en L 16a, 16b, la semelle 12 et le noyau 24, pour finir de faire pénétrer les aiguilles 26 à travers les éléments en L 16a, 16b et la semelle 12.

Enfin, le procédé comporte une étape de moulage de la pièce 10 qui est réalisée à la suite de l'étape de compactage et qui consiste à mouler la pièce 10 et à injecter de la résine dans la pièce 10 à travers les plis fibreux.

## Revendications

1. Pièce (10) en matériau composite qui comporte une semelle (12) et un renfort (14) en T, le renfort (14) en T comprenant un premier élément en L (16a) et un second élément en L (16b) qui sont agencés dos à dos pour former globalement un T, le premier élément en L (16a) et le second élément en L (16b) comprenant :
- une première embase (18a) et une seconde embase (18b) respectivement, qui sont étendues chacune sur la semelle (12) de ladite pièce (10),
- une première nervure (20a) et une seconde nervure (20b) respectivement qui sont accolées dos à dos pour former une âme,
- une première portion de raccord (22a) et une seconde portion de raccord (22b) respectivement qui relient lesdites nervures (20a, 20b) sur lesdites embases (18a, 18b) associées,
cette pièce (10) comprenant une pluralité d'aiguilles (26) qui relient chacune la semelle (12) sur le renfort (14) en T de ladite pièce (10), au voisinage desdites portions de raccord (22a, 22b) et qui s'étendent dans plusieurs directions pour s'opposer notamment à l'écartement de la semelle (12) et du renfort (14) en T,
cette pièce (10) comportant un noyau (24) qui est logé dans une cavité (27) délimitée par une zone de jonction entre la semelle (12), la première portion de raccord (22a) et la seconde portion de raccord (22b les aiguilles (26) traversant ledit noyau (24),
au moins une partie des aiguilles (26) s'étendant globalement radialement suivant le rayon de courbure de la première portion de raccord (22a) et de la seconde portion de raccord (22b) des éléments en L (16a, 16b),
au moins une partie des aiguilles (26) s'étendant globalement suivant la direction des nervures (20a, 20b) des éléments en L (16a, 16b), et
**caractérisée en ce que** lesdites aiguilles s'étendent en étoile en se croisant au centre du noyau (24) et de la pièce (10).

2. Pièce (10) en matériau composite selon la revendication 1, dans laquelle les aiguilles (26) sont formées par des fils pultrudés.

3. Pièce (10) en matériau composite selon l'une des revendications 1 ou 2, dans laquelle le noyau (24) est déformable pour épouser sensiblement la forme des éléments en L (16a, 16b).

4. Procédé pour la fabrication d'une pièce (10) en matériau composite suivant l'une quelconque des revendications précédentes, comportant au moins :
- une étape de dépose du premier élément en L (16a) et du second élément en L (16b) dans un moule,
- une étape de dépose du noyau (24),
- une étape de dépose de la semelle (12) qui consiste à emprisonner le noyau (24), et
une étape de compactage de la pièce qui consiste à presser entre eux les éléments en L (16a, 16b), la semelle (12) et le noyau (24), pour faire pénétrer les aiguilles (26) à travers les éléments en L (16a, 16b) et la semelle (12).

5. Procédé pour la fabrication d'une pièce (10) en matériau composite selon la revendication 4, dans lequel l'étape de dépose du noyau (24) consiste à insérer les aiguilles (26) à travers le noyau (24) puis à insérer le noyau (24) dans la cavité (27) délimitée par une zone de jonction entre la première portion de raccord (22a) et la seconde portion de raccord (22b) desdits éléments en L (16a, 16b).

6. Procédé pour la fabrication d'une pièce (10) en matériau composite selon l'une des revendications 4 ou 5, comprenant une étape de moulage de la pièce (10) qui est réalisée à la suite de l'étape de compactage et qui consiste à mouler la pièce (10) et à injecter de la résine dans la pièce (10).

## Patentansprüche

1. Teil (10) aus Verbundmaterial, das eine Sohle (12) und eine T-förmige Verstärkung (14) aufweist, wobei die T-förmige Verstärkung (14) ein erstes L-förmiges Element (16a) und ein zweites L-förmiges Element (16b) umfasst, die Rücken an Rücken eingerichtet sind, um global ein T zu bilden, wobei das erste L-förmige Element (16a) und das zweite L-förmige Element (16b) umfassen:
- eine jeweilige erste Basis (18a) und eine jeweilige zweite Basis (18b), die sich jeweils auf der Sohle (12) des Teils (10) erstrecken,
- eine jeweilige erste Rippe (20a) und eine jeweilige zweite Rippe (20b), die Rücken an Rücken aneinandergefügt sind, um eine Seele zu bilden,
- einen jeweiligen ersten Verbindungsabschnitt (22a) und einen jeweiligen zweiten Verbindungsabschnitt (22b), die die Rippen (20a, 20b) auf den entsprechenden Basen (18a, 18b) verbinden,
wobei dieses Teil (10) eine Vielzahl von Nadeln (26) umfasst, die jeweils die Sohle (12) auf der T-förmigen Verstärkung (14) des Teils (10) in der Nähe der Verbindungsabschnitte (22a, 22b) verbinden und die sich in mehreren Richtungen erstrecken, um insbesondere der Beabstandung der Sohle (12) und der T-förmigen Verstärkung (14) entgegenzuwirken,
wobei dieses Teil (10) einen Kern (24) aufweist, der in einem Hohlraum (27) untergebracht ist, der von einer Verbindungszone zwischen der Sohle (12), dem ersten Verbindungsabschnitt (22a) und dem zweiten Verbindungsabschnitt (22b) begrenzt ist, wobei die Nadeln (26) den Kern (24) durchqueren,
wobei sich mindestens ein Teil der Nadeln (26) global radial gemäß dem Krümmungsradius des ersten Verbindungsabschnitts (22a) und des zweiten Verbindungsabschnitts (22b) der L-förmigen Elemente (16a, 16b) erstreckt,
wobei sich mindestens ein anderer Teil der Nadeln (26) global gemäß der Richtung der Rippen (20a, 20b) der L-förmigen Elemente erstreckt (16a, 16b) und
**dadurch gekennzeichnet, dass** sich die Nadeln sternförmig erstrecken, indem sie sich im Zentrum des Kerns (24) und des Teils (10) kreuzen.

2. Teil (10) aus Verbundmaterial nach Anspruch 1, **dadurch gekennzeichnet, dass** die Nadeln (26) von stranggezogenen Drähten gebildet sind.

3. Teil (10) aus Verbundmaterial nach einem der Ansprüche 1 oder 2, **dadurch gekennzeichnet, dass** der Kern (24) verformbar ist, um etwa die Form der L-förmigen Elemente (16a, 16b) anzunehmen.

4. Verfahren zur Herstellung eines Teils (10) aus Verbundmaterial nach einem der vorangehenden Ansprüche, das mindestens aufweist:
- einen Schritt des Ablegens des ersten L-förmigen Elements (16a) und des zweiten L-förmigen Elements (16b) in einer Form,
- einen Schritt des Ablegens des Kerns (24),
- einen Schritt des Ablegens der Sohle (12), der darin besteht, den Kern (24) einzuschließen, und
einen Schritt des Verdichtens des Teils, der darin besteht, die L-förmigen Elemente (16a, 16b), die Sohle (12) und den Kern (24) zusammenzupressen, damit die Nadeln (26) die L-förmigen Elemente (16a, 16b) und die Sohle (12) durchdringen.

5. Verfahren zur Herstellung eines Teils (10) aus Verbundmaterial nach Anspruch 4, wobei der Schritt des Ablegens des Kerns (24) darin besteht, die Nadeln (26) durch den Kern (24) einzuführen und dann den Kern (24) in den Hohlraum (27) einzuführen, der von einer Verbindungszone zwischen dem ersten Verbindungsabschnitt (22a) und dem zweiten Verbindungsabschnitt (22b) der L-förmigen Elemente (16a, 16b) begrenzt ist.

6. Verfahren zur Herstellung eines Teils (10) aus Verbundmaterial nach einem der Ansprüche 4 oder 5, das einen Schritt des Formens des Teils (10) umfasst, der nach dem Schritt des Verdichtens durchgeführt wird und der darin besteht, das Teil (10) zu formen und Harz in das Teil (10) einzuspritzen.

## Claims

1. A composite material work piece (10) which includes a soleplate (12) and a T-shaped reinforcement (14), the T-shaped reinforcement (14) comprising a first L-shaped member (16a) and a second L-shaped member (16b) which are arranged back-to-back to generally form a T, the first L-shaped member (16a) and the second L-shaped member (16b) comprising:
- a first base (18a) and a second base (18b) respectively, which are each extended on the soleplate (12) of said work piece (10),
- a first rib (20a) and a second rib (20b) respectively which are attached back-to-back to form a web,
- a first connecting portion (22a) and a second connecting portion (22b) respectively which connect said ribs (20a, 20b) on said associated bases (18a, 18b),
this work piece (10) comprising a plurality of needles (26) each of which connects the soleplate (12) on the T-shaped reinforcement (14) of said work piece (10), in the vicinity of said connecting portions (22a, 22b), and which extends in several directions to oppose in particular the spacing of the soleplate (12) and the T-shaped reinforcement (14),
this work piece (10) including a core (24) which is housed in a cavity (27) delimited by a junction area between the soleplate (12), the first connecting portion (22a) and the second connecting portion (22b), the needles (26) passing through said core (24),
at least one portion of the needles (26) extending generally radially along the radius of curvature of the first connecting portion (22a) and the second connecting portion (22b) of the L-shaped members (16a, 16b),
at least another portion of the needles (26) extending generally in the direction of the ribs (20a, 20b) of the L-shaped members (16a, 16b), and
**characterized in that** said needles extending in star by intersecting at the center of the core (24) and the work piece (10).

2. The composite material work piece (10) according to claim 1, wherein the needles (26) are formed by pultruded threads.

3. The composite material work piece (10) according to any of the claims 1 or 2, wherein the core (24) is deformable to substantially match the shape of the L-shaped members (16a, 16b).

4. A manufacturing process of a composite material work piece (10) according to any one of the preceding claims, including at least:
- one deposition step of the first L-shaped member (16a) and the second L-shaped member (16b) into a mold,
- one deposition step of the core (24),
- one deposition step of the soleplate (12) which consists in trapping the core (24), and
- one compaction step of the work piece which consists in pressing the L-shaped members (16a, 16b), the soleplate (12) and the core (24) together, for penetrating the needles (26) through the L-shaped members (16a, 16b) and the soleplate (12).

5. The manufacturing process of a composite material work piece (10) according to claim 4, wherein the deposition step of the core (24) consists in inserting the needles (26) through the core (24) then in inserting the core (24) into the cavity (27) delimited by a junction area between the first connecting portion (22a) and the second connecting portion (22b) of said L-shaped members (16a, 16b).

6. The manufacturing process of a composite material work piece (10) according to any of claims 4 or 5, comprising a molding step of the work piece (10) which is carried out following the compaction step and which consists in molding the work piece (10) and injecting resin into the work piece (10).
